# FASCICULE DE BREVET EUROPEEN

(11) **EP 2 561 623 B1**
(45) Date de publication et mention de la délivrance du brevet: **03.09.2014**
(21) Numéro de dépôt: 11731426.0
(22) Date de dépôt: 19.04.2011
(51) Int. Cl.: H04B 1/713, H04B 1/7143, H04B 1/715

(54) **PROCÉDÉ ET DISPOSITIF DE DÉTERMINATION D'UN ENSEMBLE DE FRÉQUENCES EXPLOITABLES POUR LA TRANSMISSION DE L'INFORMATION ENTRE ÉMETTEURS-RÉCEPTEURS RADIOÉLECTRIQUES D'UN RÉSEAU FONCTIONNANT EN ÉVASION DE FREQUENCES**
VERFAHREN UND VORRICHTUNG ZUR BESTIMMUNG DES FREQUENZSATZES ZUR VERWENDUNG BEI DER ÜBERTRAGUNG VON INFORMATIONEN ZWISCHEN FUNKSENDEEMPFANGSGERÄTEN EINES NETZWERKS MIT FREQUENZSPRUNGVERFAHREN
METHOD AND DEVICE FOR DETERMINING A SET OF FREQUENCIES THAT CAN BE USED FOR TRANSMITTING INFORMATION BETWEEN RADIO TRANSCEIVERS OF A NETWORK OPERATING WITH FREQUENCY HOPPING

(30) Priorité: 20.04.2010 FR 1001675
(43) Date de publication de la demande: 27.02.2013
(73) Titulaire: Thales, 92200 Neuilly-sur-Seine (FR)
(72) Inventeur: DELTOUR, Bruno, F-92704 Colombes Cedex (FR); SINGLAS, Yves, F-92704 Colombes Cedex (FR); DE MOEGEN, Thibault, F-92704 Colombes Cedex (FR)
(74) Mandataire: Blot, Philippe Robert Emile
(86) Numéro de dépôt international: PCT/FR2011/050892
(87) Numéro de publication internationale: WO 2011/131899

(56) Documents cités:
- WO-A2-02/060211
- GB-A- 2 385 747
- US-A1- 2005 020 271

## Description

La présente invention concerne un procédé de détermination d'un ensemble de fréquences exploitables dans un plan de fréquences, pour la transmission de l'information entre au moins deux émetteurs-récepteurs radioélectriques d'un même réseau fonctionnant en évasion de fréquences, tel que décrit dans le préambule de la revendication 1.

La présente invention concerne également un procédé de transmission de l'information entre émetteurs-récepteurs radioélectriques d'un réseau fonctionnant en évasion de fréquences.

La présente invention concerne un dispositif de détermination d'un ensemble de fréquences exploitables dans un plan de fréquences, pour la transmission de l'information entre au moins deux émetteurs-récepteurs radioélectriques d'un même réseau fonctionnant en évasion de fréquences, tel que décrit dans le préambule de la revendication 12.

La présente invention concerne également un réseau de transmission propre à fonctionner en évasion de fréquences dans un plan de fréquences et comportant une pluralité d'émetteurs-récepteurs radioélectriques, au moins un émetteur-récepteur comportant un tel dispositif de détermination d'un ensemble de fréquences exploitables.

L'invention concerne plus particulièrement un réseau de transmission comportant au moins trois émetteurs-récepteurs, chaque émetteur-récepteur étant propre à émettre des données en conférence aux autres émetteurs-récepteurs du réseau.

On connait un procédé de détermination d'un ensemble de fréquences exploitables du type précité. La détermination de l'ensemble de fréquences exploitables est réalisée lors d'une phase d'initialisation du réseau de transmission par un émetteur-récepteur maître de la synchronisation entre les émetteurs-récepteurs du réseau. A cet effet, l'émetteur-récepteur maître recherche les fréquences du plan de fréquences prédéterminé présentant un taux d'erreur sur les bits, également appelé BER (de l'anglais Bit Error Rate), inférieur à un seuil de comparaison, dont la valeur est prédéterminée.

L'ensemble des fréquences exploitables est mis à jour régulièrement lors d'étapes ultérieures de détermination dudit ensemble, en prenant en compte l'ensemble du plan de fréquences prédéterminé. Des fréquences brouillées, c'est-à-dire non exploitables, à l'issue d'une étape précédente de détermination, peuvent alors être déterminées comme étant à nouveau exploitables lors de la mise à jour de l'ensemble des fréquences exploitables.

A l'issue de la détermination de chaque ensemble de fréquences exploitables, l'émetteur-récepteur maître diffuse l'ensemble déterminé de fréquences exploitables aux autres émetteurs-récepteurs du réseau. Les émetteurs-récepteurs du réseau se transmettent alors des données en évasion de fréquences sur l'ensemble de fréquences exploitables diffusé à tous les émetteurs-récepteurs.

Des procédés, tels que celui décrit-ci-dessus, pour la détermination et l'adaptation d'un ensemble de fréquences exploitables dans un réseau à évasion de fréquences, sont divulgués par les demandes de brevet WO 02/060211 A2, US 2005/0020271 A1 et GB 2 385 747 A.

Toutefois, l'ensemble des fréquences exploitables varie de manière importante au cours du temps, et risque de perturber la transmission de données entre émetteur-récepteurs.

Le but de l'invention est donc de proposer un procédé de détermination permettant de limiter les fluctuations de l'ensemble des fréquences exploitables dans le temps, tout en améliorant la transmission de données entre émetteur-récepteurs du réseau de transmission.

A cet effet, l'invention a pour objet un procédé de détermination selon la revendication 1.

Suivant d'autres modes de réalisation, le procédé de détermination comprend une ou plusieurs des caractéristiques selon les revendications dépendantes 2 à 8 attenantes.

L'invention a également pour objet un procédé de transmission de l'information entre au moins deux émetteurs-récepteurs radioélectriques d'un même réseau fonctionnant en évasion de fréquences, selon la revendication 9.

Suivant d'autres modes de réalisation, le procédé de transmission comprend une ou plusieurs des caractéristiques selon les revendications dépendantes 10 et 11 attenantes.

L'invention a également pour objet un dispositif de détermination selon la revendication 12.

L'invention a également pour objet un réseau de transmission propre à fonctionner en évasion de fréquences dans un plan de fréquences et comportant une pluralité d'émetteurs-récepteurs radioélectriques, selon la revendication 13.

Ces caractéristiques et avantages de l'invention apparaîtront à la lecture de la description qui va suivre, donnée uniquement à titre d'exemple non limitatif, et faite en référence aux dessins annexés, sur lesquels :
- la figure 1 est une représentation schématique d'un émetteur-récepteur d'un réseau de transmission selon l'invention,
- la figure 2 est une représentation d'un canal synchrone lorsque le réseau de transmission est en mode de communication,
- la figure 3 est une représentation du canal synchrone et d'un canal asynchrone, lorsque le réseau de transmission est en mode de veille générale,
- la figure 4 est un organigramme d'une phase initiale d'un procédé de transmission de l'information selon l'invention, et
- la figure 5 est un organigramme d'une phase ultérieure du procédé de transmission de l'information selon l'invention.

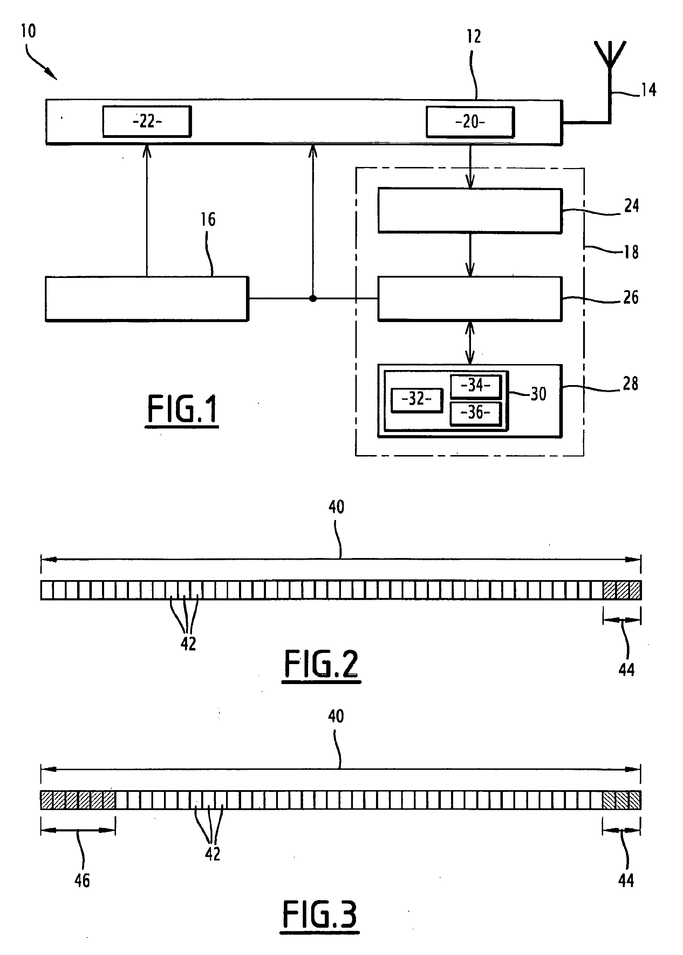

Un réseau de transmission selon l'invention comporte une pluralité d'émetteurs-récepteurs radioélectriques 10, visibles sur la figure 1, et est propre à fonctionner en évasion de fréquence. L'ensemble des fréquences utilisables par le réseau de transmission fonctionnant en évasion de fréquence est un plan de fréquences. Le plan de fréquences appartient, par exemple, au domaine des hautes fréquences, également appelé domaine HF, compris entre 1,5 MHz et 30 MHz. Le plan de fréquences est, par exemple, un plan de fréquences prédéterminé, et sera appelé par la suite plan de fréquences EVF. Le réseau de transmission est, par exemple, un réseau présentant un faible débit de transmission, de préférence inférieur à 20 kbits par seconde.

Le nombre d'émetteurs-récepteurs 10 est, par exemple, supérieur ou égal à trois, chaque émetteur-récepteur 10 étant propre à émettre des données en conférence aux autres émetteurs-récepteurs 10 du réseau.

Chaque émetteur-récepteur 10 comprend, de façon connue en soi et comme représenté sur la figure 1, une chaîne d'émission-réception 12, une antenne 14, un synthétiseur de fréquence 16 et une unité de traitement 18. Chaque émetteur-récepteur 10 est, par exemple, conforme à la norme STANAG-4444.

La chaîne d'émission-réception 12 est reliée à l'antenne d'émission-réception 14, au synthétiseur de fréquence 16 et à l'unité de traitement 18, le synthétiseur de fréquence 16 et l'unité de traitement 18 étant également reliés entre eux.

La chaîne d'émission-réception 12 comporte un dispositif 20 de réception des signaux radioélectriques issus de l'antenne 14 et un dispositif 22 d'émission de signaux radioélectriques vers l'antenne 14. La chaîne d'émission-réception 12 est propre à être pilotée de façon connue par le synthétiseur de fréquence 16.

L'unité de traitement 18 comporte un convertisseur analogique numérique 24 connecté en sortie du dispositif de réception 20 de la chaîne d'émission-réception, un microprocesseur 26 connecté en sortie du convertisseur analogique numérique 24, et une mémoire 28 reliée au microprocesseur 26.

Le convertisseur analogique numérique 24 est propre à transformer le niveau de tension ou de courant fourni par le dispositif de réception 20 en échantillons numériques de signal transmis au microprocesseur 26.

Le microprocesseur 26 est relié au synthétiseur de fréquence 16 et à la chaîne d'émission-réception 12 pour l'émission de signaux radioélectriques à destination d'autres émetteurs-récepteurs 10 du réseau de transmission.

La mémoire 28 comporte un logiciel 30 de détermination d'un ensemble de fréquences exploitables dans le plan de fréquences pour la transmission de l'information entre deux émetteurs-récepteurs 10 d'un même réseau.

Chaque fréquence de l'ensemble de fréquences exploitables présente une grandeur variable de valeur inférieure à un seuil de comparaison. Dans l'exemple de réalisation d'un réseau à faible débit de transmission, la grandeur variable est le niveau de bruit associé à une fréquence respective. En variante, la grandeur variable est le taux d'erreur sur les bits, également appelé BER (de l'anglais Bit Error Rate).

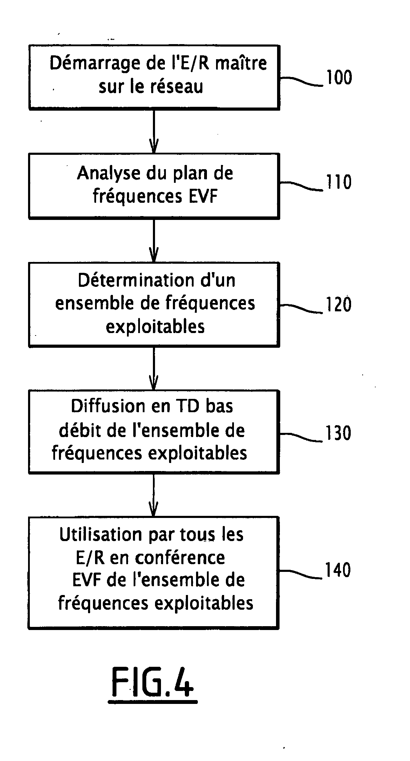

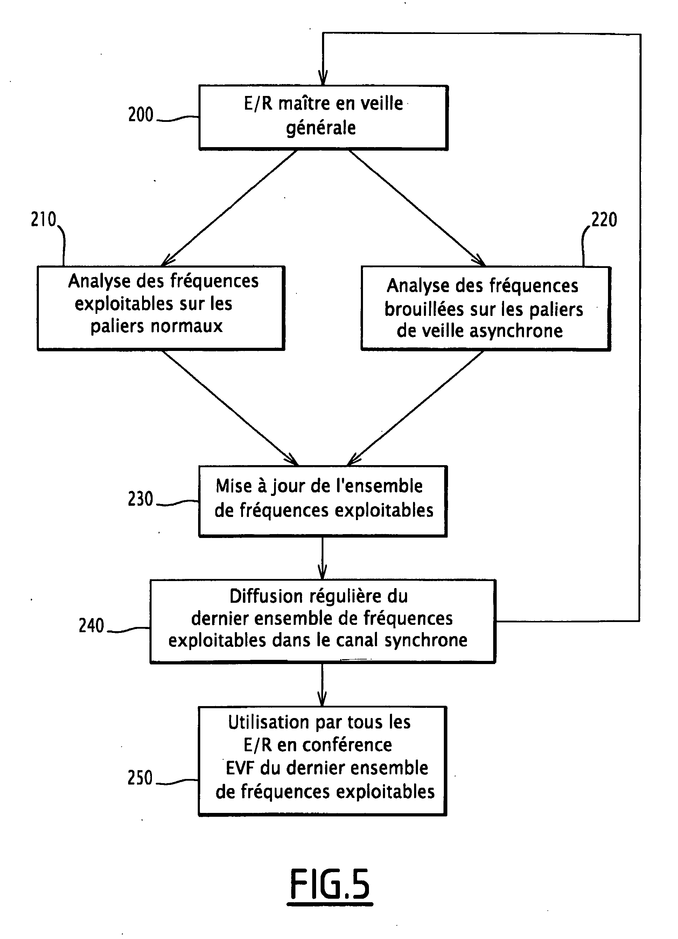

Le logiciel de détermination 30 comporte une fonction 32 de détermination initiale d'un ensemble initial de fréquences exploitables, une fonction 34 de surveillance d'au moins une partie du plan de fréquences et une fonction 36 de détermination ultérieure d'un nouvel ensemble de fréquences exploitables associé à ladite partie surveillée. Le logiciel de détermination 30 sera décrit plus en détail par la suite en regard des figures 4 et 5.

En variante, le dispositif de détermination d'un ensemble de fréquences exploitables est réalisé sous forme de composants logiques programmables, ou encore sous forme de circuits intégrés dédiés.

Sur les figures 2 et 3, conformément à la norme STANAG-4444, la trame de transmission est découpée en intervalles de service 40, chaque intervalle de service 40 comportant quarante-huit paliers 42. La durée d'un palier 42 est égale à 112,5 ms, et la durée de l'intervalle de service 40 est donc égale à 5,4 s.

Lorsque le réseau de transmission est en mode de communication, c'est-à-dire lorsqu'un émetteur-récepteur maître de la synchronisation entre les émetteurs-récepteurs 10 du réseau transmet des données, l'intervalle de service 40, visible sur la figure 2, comporte un canal synchrone 44 correspondant aux trois derniers paliers 42 de l'intervalle de service, et les autres paliers de l'intervalle de service 40 sont utilisés pour la transmission des données correspondant à la communication en cours.

Lorsque le réseau de transmission est en mode de veille générale, c'est-à-dire lorsque l'émetteur-récepteur maître n'est pas en communication, l'intervalle de service 40 comporte le canal synchrone 44 et un canal asynchrone 46, comme représenté sur la figure 3. Le canal synchrone 44 correspond aux trois derniers paliers 42 de l'intervalle de service, et le canal asynchrone 46 correspond, par exemple, aux six premiers 42 de l'intervalle de service. En variante, le canal asynchrone 46 correspond aux neuf premiers paliers 42 de l'intervalle de service.

Le procédé de transmission de l'information selon l'invention s'applique à la transmission de l'information dans des réseaux de transmission formés d'une pluralité d'émetteurs-récepteurs 10 fonctionnant en évasion de fréquence aléatoire, c'est-à-dire dans un mode de transmission où les informations sont portées sur des paliers 42 de durée déterminée. La fréquence utilisée pour la transmission de l'information est conservée durant un palier 42, et change d'un palier 42 à l'autre selon une loi de changement de fréquences, également appelée loi de saut EVF.

Le procédé de transmission de l'information va être à présent décrit en regard des figures 4 et 5. La figure 4 illustre une phase initiale du procédé de transmission de l'information, et la figure 5 illustre une phase ultérieure du procédé se déroulant après cette phase initiale.

Lors de l'étape 100 de démarrage du réseau fonctionnant en évasion de fréquence, un émetteur-récepteur parmi les émetteurs-récepteurs 10 du réseau est défini comme maître de la synchronisation entre tous les émetteurs-récepteurs 10. Autrement dit, le premier émetteur-récepteur 10 qui envoie de façon connue des tops de synchronisation à tout le réseau devient le maître du réseau. L'émetteur-récepteur maître est également responsable de la gestion des fréquences EVF.

A l'issue de l'étape de démarrage de l'émetteur-récepteur maître et de synchronisation des émetteurs-récepteurs 10, l'émetteur-récepteur maître analyse lors de l'étape 110 l'ensemble du plan de fréquences EVF.

Lors de cette analyse du plan de fréquences EVF, l'émetteur-récepteur maître commence par déterminer le niveau de bruit minimal parmi toutes les fréquences du plan de fréquences EVF. Un premier seuil de comparaison S1 est alors calculé en ajoutant un écart de bruit au niveau de bruit minimal précédemment déterminé. Une recherche en fréquence est ensuite effectuée dans le plan de fréquences EVF afin de répertorier les fréquences présentant un niveau de bruit inférieur au premier seuil de comparaison S1, ainsi que celles dont le niveau de bruit est supérieur au premier seuil de comparaison S1.

Si le nombre de fréquences présentant un niveau de bruit inférieur au premier seuil de comparaison S1 est supérieur à un nombre minimal Nₘᵢₙ prédéterminé, alors un ensemble initial de fréquences exploitables comporte lesdites fréquences présentant un niveau de bruit inférieur au premier seuil de comparaison S1.

Dans le cas contraire où le nombre de fréquences présentant un niveau de bruit inférieur au premier seuil de comparaison S1 est inférieur au nombre minimal Nₘᵢₙ, un nouvel écart de bruit est ajouté au premier seuil de comparaison S1 afin de calculer un premier seuil majoré. Une nouvelle recherche en fréquence est alors effectuée parmi les fréquences présentant un niveau de bruit supérieur au premier seuil de comparaison S1 afin de répertorier celles dont le niveau de bruit est inférieur au premier seuil majoré.

Si le nombre total de fréquences présentant un niveau de bruit inférieur au premier seuil majoré est supérieur au nombre minimal Nₘᵢₙ, l'ensemble initial de fréquences exploitables comporte lesdites fréquences dont le niveau de bruit est inférieur au premier seuil majoré. Dans le cas contraire, le processus de recherche des fréquences exploitables est itéré en augmentant la valeur du premier seuil S1 jusqu'à obtenir un nombre de fréquences exploitables supérieur au nombre minimal prédéterminé Nₘᵢₙ.

Lorsque le nombre minimal Nₘᵢₙ de fréquences présentant les niveaux de bruit sensiblement les plus faibles est atteint, l'ensemble de fréquences exploitables est alors déterminé lors de l'étape 120 en regroupant lesdites fréquences présentant un niveau de bruit inférieur à la dernière valeur du premier seuil de comparaison S1. Un vecteur de fréquences brouillées comprenant les fréquences du plan EVF n'appartenant pas à l'ensemble de fréquences exploitables est également déterminé.

L'ensemble de fréquences exploitables est ensuite diffusé par l'émetteur-récepteur maître à tous les autres émetteurs-récepteurs 10 du réseau, lors de l'étape 130. Cette diffusion est réalisée au débit le plus robuste disponible. La durée de l'ensemble des étapes 100 à 130 est de préférence inférieure à 30 s.

Tous les émetteurs-récepteurs 10 recevant cet ensemble de fréquences exploitables l'applique alors immédiatement lors de l'étape 140 à leur plan de fréquence. Dès la fin de réception de l'ensemble de fréquences exploitables, la loi de saut EVF est déterminée pour le palier suivant 42 en tirant aléatoirement une fréquence parmi l'ensemble des fréquences du plan EVF. Si la fréquence tirée appartient à l'ensemble de fréquences exploitables, cette fréquence est conservée, et est alors la fréquence utilisée pour la transmission de l'information durant le palier suivant 42. Sinon, une autre fréquence est tirée aléatoirement parmi l'ensemble de fréquences exploitables, la fréquence tirée parmi l'ensemble de fréquences exploitables étant alors la fréquence utilisée pour la transmission de l'information durant le palier suivant 42. Cette détermination de la loi de saut EVF permet de conserver des paliers communs entre un émetteur-récepteur n'ayant pas reçu l'ensemble des fréquences exploitables et un émetteur-récepteur l'ayant reçu.

A l'issue de cette phase de détermination initiale d'un ensemble initial de fréquences exploitables, l'émetteur-récepteur maître émet régulièrement l'ensemble de fréquences exploitables sur les paliers du canal synchrone 44. Tout émetteur-récepteur recevant cet ensemble de fréquences exploitables l'applique alors immédiatement à son plan de fréquences, comme décrit précédemment.

La phase ultérieure du procédé de transmission selon l'invention, visible sur la figure 5, va être à présent décrite.

Lorsque l'émetteur-récepteur maître est en veille générale (étape 200), c'est-à-dire lorsqu'il n'est pas en communication, l'émetteur-récepteur maître surveille l'ensemble des fréquences exploitables sur des paliers dits normaux lors de l'étape 210. Les paliers normaux correspondent aux paliers de l'intervalle de service 40 n'appartenant ni au canal synchrone 44, ni au canal asynchrone 46.

L'émetteur-récepteur maître surveille également, lors de l'étape 220, les fréquences appartenant au dernier vecteur de fréquences brouillées lorsqu'il est en veille générale et dans un canal asynchrone 46. L'émetteur-récepteur maître alloue, par exemple, un canal asynchrone 46 sur deux à la surveillance des fréquences du vecteur de fréquences brouillées.

A l'issue de chacune de ces étapes de surveillance, l'émetteur-récepteur maître met à jour l'ensemble de fréquences exploitables lors de l'étape 230 en déterminant un nouvel ensemble de fréquences exploitables associé à la partie du plan de fréquences surveillées.

Plus précisément, lorsqu'une fréquence du dernier ensemble de fréquences exploitables (étape 210) présente un niveau de bruit supérieur au premier seuil de comparaison S1, la fréquence est considérée comme brouillée et est supprimée du nouvel ensemble de fréquences exploitables. Lorsqu'une fréquence n'appartenant pas au dernier ensemble de fréquences exploitables (étape 220), c'est-à-dire appartenant au dernier vecteur de fréquences brouillées, présente un niveau de bruit inférieur à un deuxième seuil de comparaison S2, ladite fréquence n'est plus considérée comme étant brouillée et est ajoutée au nouvel ensemble de fréquences exploitables.

Le deuxième seuil de comparaison S2 présente une valeur distincte de celle du premier seuil de comparaison S1, la valeur du deuxième seuil S2 étant de préférence inférieure à celle du premier seuil S1.

Cette différence de valeur entre les seuils S1, S2 permet également d'améliorer la stabilité du procédé de détermination en évitant que les fréquences présentent un niveau de bruit proche des seuils de comparaison S1, S2 ne changent trop souvent de statut, en passant du statut de fréquence exploitable à celui de fréquence brouillée, ou inversement de celui de fréquence brouillée à celui de fréquence exploitable.

En variante, une fréquence du dernier ensemble de fréquences exploitables est considérée comme brouillée, et est supprimée du nouvel ensemble de fréquences exploitables seulement lorsqu'elle présente un niveau de bruit supérieur au premier seuil S1 lors d'une pluralité de mesures successives, de préférence au cours de trois mesures successives. De manière analogue, une fréquence du dernier vecteur de fréquences brouillées est considérée comme exploitable, et est ajoutée au nouvel ensemble de fréquences exploitables seulement lorsqu'elle présente un niveau de bruit inférieur au deuxième seuil S2 lors d'une pluralité de mesures successives, de préférence au cours de trois mesures successives.

L'ajout de cette condition supplémentaire relative à la pluralité de mesures successives permet également d'améliorer la stabilité du procédé de détermination de l'ensemble de fréquences exploitables. En effet, ceci permet d'éviter qu'une fréquence soit alternativement considérée comme exploitable, puis comme brouillée, à chaque nouvelle mesure lorsqu'elle présente un niveau de bruit proche des premier et deuxième seuils S1, S2.

Lors de l'étape de mise à jour 230, si le nombre de fréquences exploitables n'est plus supérieur au nombre minimal prédéterminé Nₘᵢₙ, par exemple dans le cas où un certain nombre de fréquences du dernier ensemble de fréquences exploitables présente un niveau de bruit trop important et sont désormais considérées comme brouillées, la valeur du premier seuil S1 est augmentée. L'analyse du niveau de bruit des fréquences de l'ensemble des fréquences exploitables (étape 210) est alors à nouveau effectuée afin que le nouvel ensemble de fréquences exploitables comporte un nombre de fréquences supérieur au nombre minimal Nₘᵢₙ.

La valeur variable du premier seuil S1 permet donc de garantir que l'ensemble de fréquences exploitables comporte à tout moment le nombre minimal prédéterminé Nₘᵢₙ de fréquences.

A l'issue de l'étape de mise à jour 230, le nouvel ensemble de fréquences exploitables est diffusé (étape 240) dans le prochain canal synchrone 44 par l'émetteur-récepteur maître à tous les autres émetteurs-récepteurs 10 du réseau.

A l'issue de l'étape de diffusion 240, l'émetteur-récepteur maître retourne à l'étape 200 dès qu'il est à nouveau en veille générale, afin de réitérer la phase ultérieure du procédé de transmission et de permettre une éventuelle nouvelle mise à jour de l'ensemble des fréquences exploitables.

Tous les émetteurs-récepteurs 10 recevant ce nouvel ensemble de fréquences exploitables l'appliquent immédiatement à leur plan de fréquences afin de l'utiliser lors de l'étape 150 en conférence EVF. La loi de saut EVF est modifiée de manière analogue à ce qui a été décrit précédemment pour l'étape 140 de la phase initiale du procédé de transmission de l'information.

Les étapes 200 à 240 de la phase ultérieure du procédé de transmission sont réalisées de manière régulière et automatique par l'émetteur-récepteur maître, permettant ainsi une mise à jour régulière et automatique de l'ensemble des fréquences exploitables.

Cette mise à jour des fréquences exploitables permet de conserver la qualité de la transmission des données entre émetteurs-récepteurs 10 du réseau au cours du temps, et est imperceptible pour l'utilisateur de l'émetteur-récepteur maître.

## Revendications

1. Procédé de détermination d'un ensemble de fréquences exploitables dans un plan de fréquences, pour la transmission de l'information entre au moins deux émetteurs-récepteurs radioélectriques (10) d'un même réseau fonctionnant en évasion de fréquences, le procédé comprenant :
- une étape (120) de détermination initiale d'un ensemble initial de fréquences exploitables, chaque fréquence de l'ensemble initial présentant une grandeur variable, telle que le niveau de bruit ou le taux d'erreur sur les bits, la grandeur variable étant de valeur inférieure à un seuil de comparaison,
- au moins une étape (210, 220) de surveillance d'une première et d'une deuxième parties du plan de fréquences, la première partie surveillée comportant l'ensemble de fréquences exploitables déterminé à l'issue de l'étape de détermination précédente, la deuxième partie surveillée comportant des fréquences n'appartenant pas à l'ensemble de fréquences exploitables déterminé à l'issue de l'étape de détermination précédente, et
- une étape (230) de détermination ultérieure d'un nouvel ensemble de fréquences exploitables associée à la première partie surveillée et une étape (230) de détermination ultérieure du nouvel ensemble de fréquences exploitables associée à la deuxième partie surveillée, chaque fréquence du nouvel ensemble présentant une grandeur variable de valeur inférieure au seuil de comparaison associé à l'étape de détermination ultérieure (230),
l'étape de surveillance (210, 220) et les étapes de détermination ultérieure (230) étant réalisées de manière automatique par un émetteur-récepteur,
**caractérisé en ce que** l'étape de détermination ultérieure associée à la première partie surveillée présente un premier seuil de comparaison, et **en ce que** l'étape de détermination ultérieure associée à la deuxième partie surveillée présente un deuxième seuil de comparaison de valeur distincte de celle du premier seuil de comparaison.

2. Procédé selon la revendication 1, dans lequel le deuxième seuil de comparaison présente une valeur inférieure à celle du premier seuil de comparaison.

3. Procédé selon la revendication 1 ou 2, dans lequel une fréquence de la première partie surveillée est supprimée du nouvel ensemble de fréquences exploitables seulement lorsque la valeur de sa grandeur variable est supérieure au premier seuil lors d'une pluralité de mesures successives, de préférence au cours de trois mesures successives.

4. Procédé selon l'une quelconque des revendications précédentes, dans lequel une fréquence de la deuxième partie surveillée est ajoutée au nouvel ensemble de fréquences exploitables seulement lorsque la valeur de sa grandeur variable est inférieure au deuxième seuil lors d'une pluralité de mesures successives, de préférence au cours de trois mesures successives.

5. Procédé selon l'une quelconque des revendications précédentes, dans lequel la grandeur variable est le niveau de bruit associé à une fréquence respective.

6. Procédé selon l'une quelconque des revendications précédentes, dans lequel le plan de fréquences est un plan de fréquences prédéterminé.

7. Procédé selon l'une quelconque des revendications précédentes, dans lequel chaque ensemble de fréquences exploitables comporte un nombre minimal prédéterminé de fréquences, la valeur du seuil de comparaison étant variable.

8. Procédé selon l'une quelconque des revendications précédentes, le réseau comprenant un émetteur-récepteur maître de la synchronisation entre les émetteurs-récepteurs (10) du réseau, procédé dans lequel l'étape de surveillance (210, 220) et l'étape de détermination ultérieure (230) sont réalisées par l'émetteur-récepteur maître de la synchronisation.

9. Procédé de transmission de l'information entre au moins deux émetteurs-récepteurs radioélectriques (10) d'un même réseau fonctionnant en évasion de fréquences, **caractérisé en ce qu'**il comprend les étapes suivantes :
- la détermination (120, 230) par un émetteur-récepteur d'un ensemble de fréquences exploitables dans un plan de fréquences selon un procédé conforme à l'une quelconque des revendications précédentes,
- l'émission (130, 240) par ledit émetteur-récepteur de l'ensemble de fréquences exploitables préalablement déterminé aux autres émetteurs-récepteurs (10) du réseau, l'ensemble de fréquences exploitables étant émis régulièrement, et
- la transmission de données (140, 250) en évasion de fréquences entre émetteurs-récepteurs (10) sur l'ensemble de fréquences exploitables émis à tous les émetteurs-récepteurs du réseau.

10. Procédé de transmission selon la revendication 9, dans lequel l'ensemble de fréquences exploitables est émis à l'issue de chaque détermination ultérieure (230) d'un nouvel ensemble de fréquences exploitables.

11. Procédé de transmission selon la revendication 9 ou 10, la fréquence utilisée pour la transmission de l'information étant conservée durant un palier (42), et changeant d'un palier (42) à l'autre selon une loi de changement de fréquences, dans lequel la loi de changement de fréquences est déterminée pour le palier suivant (42) en tirant aléatoirement une fréquence parmi l'ensemble des fréquences du plan de fréquences, dans lequel si la fréquence tirée appartient à l'ensemble de fréquences exploitables, alors la fréquence tirée est la fréquence utilisée pour la transmission de l'information durant le palier suivant (42), et dans lequel si la fréquence tirée n'appartient pas à l'ensemble de fréquences exploitables, alors la fréquence utilisée pour la transmission de l'information durant le palier suivant (42) est tirée aléatoirement parmi l'ensemble de fréquences exploitables.

12. Dispositif (30) de détermination d'un ensemble de fréquences exploitables dans un plan de fréquences, pour la transmission de l'information entre au moins deux émetteurs-récepteurs radioélectriques (10) d'un même réseau fonctionnant en évasion de fréquences, le dispositif (30) comprenant :
- des moyens (32) de détermination initiale d'un ensemble initial de fréquences exploitables, chaque fréquence de l'ensemble initial présentant une grandeur variable, telle que le niveau de bruit ou le taux d'erreur sur les bits, la grandeur variable étant de valeur inférieure à un seuil de comparaison,
- des moyens (34) de surveillance d'une première et d'une deuxième parties du plan de fréquences, la première partie surveillée comportant l'ensemble de fréquences exploitables déterminé à l'issue de l'étape de détermination précédente, la deuxième partie surveillée comportant des fréquences n'appartenant pas à l'ensemble précédent de fréquences exploitables, et
- des moyens (36) de détermination ultérieure d'un nouvel ensemble de fréquences exploitables associée à la première partie surveillée et de détermination ultérieure du nouvel ensemble de fréquences exploitables associée à la deuxième partie surveillée, chaque fréquence du nouvel ensemble présentant une grandeur variable de valeur inférieure au seuil de comparaison,
les moyens de surveillance (34), respectivement les moyens de détermination ultérieure (36), étant propres à réaliser de manière automatique la surveillance (210, 220) de ladite partie, respectivement les déterminations ultérieures (230) du nouvel ensemble de fréquences exploitables,
**caractérisé en ce que** les moyens de détermination ultérieure (36) comportent un premier seuil de comparaison associé à la première partie surveillée et un deuxième seuil de comparaison associé à la deuxième partie surveillée, de valeur distincte de celle du premier seuil de comparaison.

13. Réseau de transmission propre à fonctionner en évasion de fréquences dans un plan de fréquences et comportant une pluralité d'émetteurs-récepteurs radioélectriques (10), **caractérisé en ce qu'**au moins un émetteur-récepteur comporte un dispositif de détermination selon la revendication 12.

## Patentansprüche

1. Verfahren zum Ermitteln einer Menge von nutzbaren Frequenzen in einer Frequenzebene für die Übermittlung einer Information zwischen mindestens zwei radioelektrischen Sende-Empfangsgeräten (10) eines selben Netzes, das mit Frequenzsprungverfahren funktioniert, wobei das Verfahren aufweist:
- einen Schritt (120) des anfänglichen Ermittelns einer Anfangsmenge von nutzbaren Frequenzen, wobei jede Frequenz der Anfangsmenge eine variable Größe, wie zum Beispiel den Störpegel oder die Bitfehlerrate aufweist, wobei die variable Größe einen kleineren Wert als ein Vergleichsschwellenwert hat,
- mindestens einen Schritt (210, 220) des Überwachens eines ersten und eines zweiten Teils der Frequenzebene, wobei der erste überwachte Teil die Menge von nutzbaren Frequenzen aufweist, die am Ende des vorhergehenden Ermittlungsschrittes ermittelt wurde, wobei der zweite überwachte Teil Frequenzen aufweist, die nicht zu der Menge von nutzbaren Frequenzen gehören, die am Ende des vorhergehenden Ermittlungsschrittes ermittelt wurde, und
- einen Schritt (230) des nachträglichen Ermittelns einer neuen Menge von nutzbaren Frequenzen, der dem ersten überwachten Teil zugeordnet ist, und einen Schritt (230) des nachträglichen Ermittelns der neuen Menge von nutzbaren Frequenzen, der dem zweiten überwachten Teil zugeordnet ist, wobei jede Frequenz der neuen Menge eine variable Größe mit einem Wert aufweist, der kleiner als der Vergleichsschwellenwert ist, der dem Schritt des nachträglichen Ermittelns (230) zugeordnet ist,
wobei der Schritt des Überwachens (210, 220) und die Schritte des nachträglichen Ermittelns (230) mittels eines Sende-Empfangsgerätes automatisch durchgeführt werden,
**dadurch gekennzeichnet, dass** der Schritt des nachträglichen Ermittelns, der dem ersten überwachten Teil zugeordnet ist, einen ersten Vergleichsschwellenwert aufweist, und dass der Schritt des nachträglichen Ermittelns, der dem zweiten überwachten Teil zugeordnet ist, einen zweiten Vergleichsschwellenwert aufweist, der einen anderen Wert als derjenige des ersten Vergleichsschwellenwertes hat.

2. Verfahren gemäß Anspruch 1, wobei der zweite Vergleichsschwellenwert einen Wert hat, der kleiner als derjenige des ersten Vergleichsschwellenwertes ist.

3. Verfahren gemäß Anspruch 1 oder 2, wobei eine Frequenz des ersten überwachten Teils in der neuen Menge von nutzbaren Frequenzen nur dann unterdrückt wird, wenn der Wert ihrer variablen Größe bei einer Mehrzahl von aufeinanderfolgenden Messungen, vorzugsweise während drei aufeinanderfolgenden Messungen größer als der erste Schwellenwert ist.

4. Verfahren gemäß irgendeinem der vorhergehenden Ansprüche, wobei eine Frequenz des zweiten überwachten Teils der neuen Menge von nutzbaren Frequenzen nur dann hinzugefügt wird, wenn der Wert ihrer variablen Größe bei einer Mehrzahl von aufeinanderfolgenden Messungen, vorzugsweise während drei aufeinanderfolgenden Messungen kleiner als der zweite Schwellenwert ist.

5. Verfahren gemäß irgendeinem der vorhergehenden Ansprüche, wobei die variable Größe der Störpegel ist, der einer jeweiligen Frequenz zugeordnet ist.

6. Verfahren gemäß irgendeinem der vorhergehenden Ansprüche, wobei die Frequenzebene eine vorbestimmte Frequenzebene ist.

7. Verfahren gemäß irgendeinem der vorhergehenden Ansprüche, wobei jede Menge von nutzbaren Frequenzen eine minimale vorbestimmte Anzahl von Frequenzen aufweist, wobei der Wert des Vergleichsschwellenwertes variabel ist.

8. Verfahren gemäß irgendeinem der vorhergehenden Ansprüche, wobei das Netz ein Master-Sende-Empfangsgerät für die Synchronisation zwischen den Sende-Empfangsgeräten (10) des Netzes aufweist, wobei in dem Verfahren der Schritt des Überwachens (210, 220) und der Schritt des nachträglichen Ermittelns (230) mittels des Synchronisierungs-Master-Sende-Empfangsgerätes durchgeführt werden.

9. Verfahren zum Übermitteln einer Information zwischen mindestens zwei radioelektrischen Sende-Empfangsgeräten (10) eines selben Netzes, das mit Frequenzsprungverfahren funktioniert, **dadurch gekennzeichnet, dass** es die folgenden Schritte aufweist:
- Ermitteln (120, 230) mittels eines Sende-Empfangsgerätes einer Menge von nutzbaren Frequenzen in einer Frequenzebene gemäß einem Verfahren gemäß irgendeinem der vorhergehenden Ansprüche,
- Senden (130, 240) mittels des Sende-Empfangsgerätes der Menge von nutzbaren Frequenzen, die zuvor ermittelt wurde, an die anderen Sende-Empfangsgeräte (10) des Netzes, wobei die Menge von nutzbaren Frequenzen regelmäßig ausgesendet wird, und
- Übermitteln von Daten (140, 250) im Frequenzsprungverfahren zwischen Sende-Empfangsgeräten (10) auf der Menge von nutzbaren Frequenzen, die an alle Sende-Empfangsgeräte des Netzes ausgesendet wird.

10. Übermittlungsverfahren gemäß Anspruch 9, wobei die Menge von nutzbaren Frequenzen am Ende jedes nachträglichen Ermittelns (230) einer neuen Menge von nutzbaren Frequenzen ausgesendet wird.

11. Übermittlungsverfahren gemäß Anspruch 9 oder 10, wobei die für das Übermitteln der Information verwendete Frequenz während einer Phase (42) gehalten wird, und wobei gemäß einem Frequenzänderungsgesetz von einer Phase (42) zu der anderen gewechselt wird, wobei das Frequenzänderungsgesetz für die folgende Phase (42) ermittelt wird, indem eine Frequenz aus der Menge von Frequenzen der Frequenzebene zufällig ausgewählt wird, wobei, wenn die ausgewählte Frequenz zu der Menge von nutzbaren Frequenzen gehört, die ausgewählte Frequenz während der folgenden Phase (42) die für die Übermittlung der Information verwendete Frequenz ist, und wobei, wenn die ausgewählte Frequenz nicht zu der Menge von nutzbaren Frequenzen gehört, die während der folgenden Phase (42) für die Übermittlung der Information verwendete Frequenz zufällig aus der Menge von nutzbaren Frequenzen ausgewählt wird.

12. Vorrichtung (30) zum Ermitteln einer Menge von nutzbaren Frequenzen in einer Frequenzebene für das Übermitteln einer Information zwischen mindestens zwei radioelektrischen Sende-Empfangsgeräten (10) eines selben Netzes, das mit Frequenzsprungverfahren funktioniert, wobei die Vorrichtung (30) aufweist:
- Mittel (32) zum anfänglichen Ermitteln einer Anfangsmenge von nutzbaren Frequenzen, wobei jede Frequenz der Anfangsmenge eine variable Größe aufweist, zum Beispiel den Störpegel oder die Bitfehlerrate, wobei die variable Größe einen kleineren Wert als ein Vergleichsschwellenwert hat,
- Mittel (34) zum Überwachen eines ersten und eines zweiten Teils der Frequenzebene, wobei der erste überwachte Teil die Menge von nutzbaren Frequenzen aufweist, die am Ende des vorhergehenden Ermittlungsschrittes ermittelt wurde, wobei der zweite überwachte Teil Frequenzen aufweist, die nicht zu der vorhergehenden Menge von nutzbaren Frequenzen gehört, und
- Mittel (36) zum nachträglichen Ermitteln einer neuen Menge von nutzbaren Frequenzen, welches dem ersten überwachten Teil zugeordnet ist, und zum nachträglichen Überwachen der neuen Menge von nutzbaren Frequenzen, welches dem zweiten überwachten Teil zugeordnet ist, wobei jede Frequenz der neuen Menge eine variable Größe mit einem Wert aufweist, der kleiner als der Vergleichsschwellenwert ist,
wobei die Überwachungsmittel (34) bzw. die Mittel zum nachträglichen Ermitteln (36) in der Lage sind, das Überwachen (210, 220) des jeweiligen Teils bzw. das nachträgliche Ermitteln (230) der neuen Menge von nutzbaren Frequenzen automatisch durchzuführen,
**dadurch gekennzeichnet, dass** die Mittel zum nachträglichen Ermitteln (36) aufweisen: einen ersten Vergleichsschwellenwert, der dem ersten überwachten Teil zugeordnet ist, und einen zweiten Vergleichsschwellenwert, der dem zweiten überwachten Teil zugeordnet ist, der einen anderen Wert als derjenige des ersten Vergleichsschwellenwertes hat.

13. Übertragungsnetz, das geeignet ist, im Frequenzsprungverfahren in einer Frequenzebene zu funktionieren, und das eine Mehrzahl von radioelektrischen Sende-Empfangsgeräten (10) aufweist, **dadurch gekennzeichnet, dass** mindestens ein Sende-Empfangsgerät eine Ermittlungsvorrichtung gemäß Anspruch 12 aufweist.

## Claims

1. A method for determining a set of frequencies which may be used in a frequency plane, for the transmission of information between at least two radio transceivers (10) of a same network operating with frequency hopping, the method comprising:
- a step (120) for initially determining an initial set of frequencies which may be used, each frequency of the initial set having a variable quantity, such as a noise level or a bit error rate, with a value below a comparison threshold,
- at least one step (210, 220) for monitoring first and second portions of the frequency plane, the first monitored portion including the set of the frequencies which may be used, determined at the end of the previous determination step, the second monitored portion including frequencies not belonging to the set of the frequencies which may be used, determined at the end of the previous determination step, and
- a step (230) for subsequently determining a new set of frequencies which may be used associated with the first monitored portion, a step (230) for subsequently determining a new set of frequencies which may be used associated with the second monitored portion, each frequency of the new set having a variable quantity with a value below the comparison threshold associated with the subsequent determination step (230),
the monitoring step (210, 220) and the subsequent determination step (230) being performed automatically by a transceiver,
**characterized in that** the subsequent determination step associated with the first monitored portion has a first comparison threshold, and **in that** the subsequent determination step associated with the second monitored portion has a second comparison threshold with a value distinct from that of the first comparison threshold.

2. The method according to claim 1, wherein the second comparison threshold has a value below that of the first comparison threshold.

3. The method according to claim 1 or 2, wherein a frequency of the first monitored portion is suppressed from the new set of frequencies which may be used only when the value of its variable quantity is greater than the first threshold during a plurality of successive measurements, preferably during three successive measurements.

4. The method according to any one of the preceding claims, wherein a frequency of the second monitored portion is added to the new set of frequencies which may be used only when the value of its variable quantity is less than the second threshold during a plurality of successive measurements, preferably during three successive measurements.

5. The method according to any one of the preceding claims, wherein the variable quantity is the noise level associated with a respective frequency.

6. The method according to any one of the preceding claims, wherein the frequency plane is a predetermined frequency plane.

7. The method according to any one of the preceding claims, wherein each set of frequencies, which may be used, includes a predetermined minimum number of frequencies, the value of the comparison threshold being variable.

8. The method according to any one of the preceding claims, the network comprising a master transceiver of the synchronization between the transceivers of the network, the method wherein the monitoring step (210, 220) and the subsequent determination step (230) are carried out by the master transceiver of the synchronization.

9. A method for transmitting information between at least two radio transceivers (10) of a same network operating with frequency hopping, **characterized in that** it comprises the following steps:
- determining (120, 130) with a transceiver, a set of frequencies, which may be used, in a frequency plane according to a method in accordance with any one of the preceding claims,
- transmitting (130, 240) with said transceiver, the set of frequencies which may be used, determined beforehand to the other transceivers (10) of the network, the set of frequencies which may be used being regularly transmitted, and
- transmitting (140, 250) data with frequency hopping between transceivers (10) on the set of the frequencies which may be used, transmitted to all the transceivers of the network.

10. The transmission method according to claim 9, wherein the set of frequencies which may be used is transmitted at the end of each subsequent determination (230) of a new set of frequencies which may be used.

11. The transmission method according to claim 9 or 10, the frequency used for the transmission of the information being retained during a step (42), and changing from one step (42) to the other according to a frequency changing law, wherein the frequency changing law is determined for the next step (42) by randomly drawing a frequency from the set of the frequencies of the frequency plane, wherein if the drawn frequency belongs to the set of frequencies which may be used, then the frequency drawn is the frequency used for transmitting the information during the next step (42), and wherein, if the drawn frequency does not belong to the set of the frequencies which may be used, then the frequency used for transmitting the information during the next step (42) is randomly drawn from the set of the frequencies which may be used.

12. A device (30) for determining a set of frequencies which may be used in a frequency plane, for transmitting information between at least two radio transceivers (10) of a same network operating with frequency hopping, the device (30) comprising:
- means (32) for initially determining an initial set of frequencies which may be used, each frequency of the initial set having a variable quantity, such as a noise level or a bit error rate, with a value less than a comparison threshold,
- means (34) for monitoring first and second portions of the frequency plane, the first monitored portion including the set of frequencies which may be used determined at the end of the preceding determination step, the second monitored portion including frequencies not belonging to the preceding set of frequencies which may be used, and
- means (36) for subsequently determining a new set of frequencies which may be used, associated with the first monitored portion and for subsequently determining a new set of frequencies which may be used, associated with the second monitored portion, each frequency of the new set having a variable quantity with a value less than the comparison threshold,
the monitoring means (34), respectively the subsequent determination means (36) being able to carry out automatically the monitoring of said portion (210, 220), respectively the subsequent determination (230) of the new set of frequencies which may be used,
**characterized in that** the subsequent determination means (36) include a first comparison threshold associated with the first monitored portion and a second comparison threshold associated with the second monitored portion, with a value distinct from that of the first comparison threshold.

13. A transmission network able to operate with frequency hopping in a frequency plane and including a plurality of radio transceivers (10) **characterized in that** at least one transceiver includes a determination device according to claim 12.
